# EUROPÄISCHE PATENTSCHRIFT

(11) **EP 2 223 779 B1**
(45) Veröffentlichungstag und Bekanntmachung des Hinweises auf die Patenterteilung: **27.01.2016**
(21) Anmeldenummer: 10001083.4
(22) Anmeldetag: 03.02.2010
(51) Int. Cl.: H01M 2/10, H01M 2/30, B25F 5/02, A01G 3/053, H02J 7/00

(54) **Tragbares, handgeführtes Elektrogerät mit einem Akkupack**
Portable, hand-held electric device with a battery pack
Appareil électrique portatif doté d'une batterie

(30) Priorität: 27.02.2009 DE 102009012184
(43) Veröffentlichungstag der Anmeldung: 01.09.2010
(73) Patentinhaber: Andreas Stihl AG & Co. KG, 71336 Waiblingen (DE)
(72) Erfinder: Roßkamp, Heiko, Dr., 73099 Adelberg (DE); Mang, Harald, 71364 Winnenden (DE); Müller, Matthias, 73614 Schorndorf-Haubersbronn (DE); Reber, Volker, 74544 Michelbach (DE)
(74) Vertreter: Wasmuth, Rolf

(56) Entgegenhaltungen:
- EP-A1- 1 036 636
- EP-A2- 1 419 723
- DE-A1- 19 521 426
- US-A- 4 871 629
- US-A- 4 930 583
- US-B1- 6 319 053

## Beschreibung

Die Erfindung betrifft ein handgeführtes Elektrogerät, insbesondere ein tragbares, handgeführtes Arbeitsgerät wie eine Heckenschere, eine Motorkettensäge, einen Freischneider oder dgl. nach dem Oberbegriff des Anspruchs 1.

Aus der DE 10 2005 036 448 A1 ist ein Akkuschrauber bekannt, welcher einen im Griff des Werkzeugs aufgenommenen Akkupack aufweist. Der Akkupack besteht aus drei Zellen und wird über Führungsschienen in einen im Griff vorgesehenen Akkuschacht eingeschoben, wobei in Einschubrichtung zugleich die Kontaktierung erfolgt.

Sollen größere Spannungen und größere Leistungen zur Verfügung gestellt werden, müssen die Akkupacks mehr Zellen aufnehmen, so z. B. 15, 30 und mehr Zellen. Mit der Anzahl der Zellen steigt das Gewicht eines Akkupacks, so dass dessen Einfädeln in einen Akkuschacht und dessen Kontaktierung mit den im Gerät vorgesehenen elektrischen Anschlüssen problematisch wird.

Aus der DE 195 21 426 A1 ist ein handgeführtes Elektrogerät bekannt, in dessen Gehäuse ein Akkuschacht zur Aufnahme eines Akkupacks vorgesehen ist. Der Akkuschacht weist dabei in Einschubrichtung sich erstreckende Führungselemente auf, die mit Führungsabschnitten des Akkupacks zusammenwirken. Am Gehäuse des Akkupacks ist ein in Einschubrichtung vorne liegender elektrischer Anschlusskopf ausgebildet, dem im Akkuschacht liegende Kontaktelemente zugeordnet sind. In Einschubstellung des Akkupacks im Akkuschacht kontaktieren die Kontaktelemente den Anschlusskopf elektrisch. Dabei sind die Kontaktelemente im Akkuschacht auf einer Kontaktplatte gehalten, die im Akkuschacht schwimmend gelagert ist. Der Akkupack muss in seiner Einschubstellung derart gehalten sein, dass die schwimmende Lagerung den Akkupack nicht aus seiner Halterung löst.

Der Erfindung liegt die Aufgabe zugrunde, ein Elektrowerkzeug mit einem Akkuschacht für einen Akkupack mit einer Vielzahl von Zellen derart auszubilden, dass auch Akkupacks mit großem Volumen leicht und sicher in den Akkuschacht eingefädelt und in der kontaktierten Einschubstellung im Akkuschacht sicher gehalten werden.

Die Aufgabe wird erfindungsgemäß nach den Merkmalen des Anspruchs 1 gelöst.

Durch die schwimmend gelagerte Kontaktplatte können Positionierungenauigkeiten zwischen einem Anschlusskopf des Akkupacks und den Kontaktelementen selbsttätig ausgeglichen werden, ohne dass eine mechanische Beschädigung der Kontakte oder eine mangelnde elektrische Kontaktierung auftritt. Durch die Verriegelung der Einschubstellung gegen die Kraft einer Hubfeder wird eine verspannte Halterung erzielt, die - nach der erfolgten Kontaktierung - auch zu einer Festlegung der Kontaktplatte führt. Dadurch können Vibrationen im Kontaktbereich gesenkt werden.

Der Akkupack ist in seiner Einschubstellung im Akkuschacht durch Rastriegel verriegelt, die erfindungsgemäß als Schwenkriegel ausgebildet sind. Der Lagerbolzen ist zwischen einem Gehäuseoberteil und einem Gehäuseunterteil des Gehäuses des Elektrogerätes unverlierbar gehalten, wodurch eine einfache und zugleich hoch belastbare Anbindung am Gehäuse erzielt ist. Die Kinematik des Rastriegels ist vorzugsweise so vorgesehen, dass die Verrastung selbstverriegelnd ist.

Zur Verriegelung sind zweckmäßig zwei auf einander gegenüberliegenden Längsseiten des Akkuschachtes angeordnete Rastriegel vorgesehen, die mit Rastanschlägen am Gehäuse des Akkupacks zusammenwirken.

Bevorzugt ist die Kontaktplatte in der Plattenebene beweglich gehalten, so dass sie sich zu dem im Akkuschacht liegenden Akkupack ausrichten kann. Zweckmäßig wird die Kontaktplatte hierzu an den in Einschubrichtung sich erstreckenden Führungselementen des Akkuschachtes mit Spiel gehalten.

Um beim Wechseln des Akkupacks ein Ausheben der Kontaktplatte aus dem Akkuschacht sicher zu vermeiden, ist vorgesehen, die Kontaktplatte am Boden des Akkuschachtes anzubinden, vorzugsweise am Boden des Akkuschachtes zu verrasten. Damit können die auf die Kontaktplatte wirkenden Auszugskräfte beim Ausheben des Akkus entgegen Einschubrichtung abgefangen werden, ohne dass die schwimmende Lagerung der Kontaktplatte selbst beeinträchtigt ist.

Zweckmäßig wird die Kontaktplatte in einem Kontaktplattenhalter angeordnet, der an den Führungselementen des Akkuschachtes geführt und gehalten ist und vorzugsweise als Träger weiterer elektrischer Bauteile des Elektrogerätes dient. Ein derartiger Kontaktplattenhalter kann als Modul ausgebaut sein, der vor Einbau in das Gehäuse eines Elektrogerätes bestückt werden kann.

Greifen die Führungselemente des Akkuschachtes mit Spiel in die Führungsabschnitte des Akkupacks ein, ist auch der Akkupack im Akkuschacht ebenso wie die Kontaktplatte im Akkuschacht beweglich, so dass auch der Akkupack relativ zur Kontaktplatte beweglich ist.

Zur Kontaktierung weist der Anschlusskopf des Akkupacks Kontaktschlitze zum Eingriff von Kontaktelementen der Kontaktplatte auf, wobei sich die Kontaktschlitze vom Boden des Anschlusskopfes bis in dessen Stirnseite erstrecken. Zweckmäßig wird für eine Vorpositionierung auf der Kontaktplatte ein Zentrierelement angeordnet, welches die Kontaktelemente in der Höhe überragt und in Einschubstellung in eine Zentrieraufnahme im Anschlusskopf eingreift.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: in perspektivischer Darstellung einen Akkupack für ein handgeführtes Elektrogerät,
- Fig. 2: eine Ansicht auf die Anschlussseite des Akkupacks nach Fig. 1,
- Fig. 3: in schematischer Darstellung ein Teilgehäuse eines handgeführten Elektrogerätes am Beispiel eines Heckenscherengehäuses,
- Fig. 4: in Seitenansicht einen Einschub als Träger für eine Kontaktplatte,
- Fig. 5: im Schnitt den im Akkuschacht des Gehäuses nach Fig. 3 gehaltenen Einschub,
- Fig. 6: einen Schnitt durch ein Gehäuse nach Fig. 3 mit im Akkuschacht verriegelt gehaltenem Akkupack,
- Fig. 7: in schematischer Darstellung einen in den Akkuschacht eingeschobenen Akkupack,
- Fig. 8: in schematischer Darstellung die Zuordnung einer Kontaktplatte zum Anschlusskopf des Akkupacks,

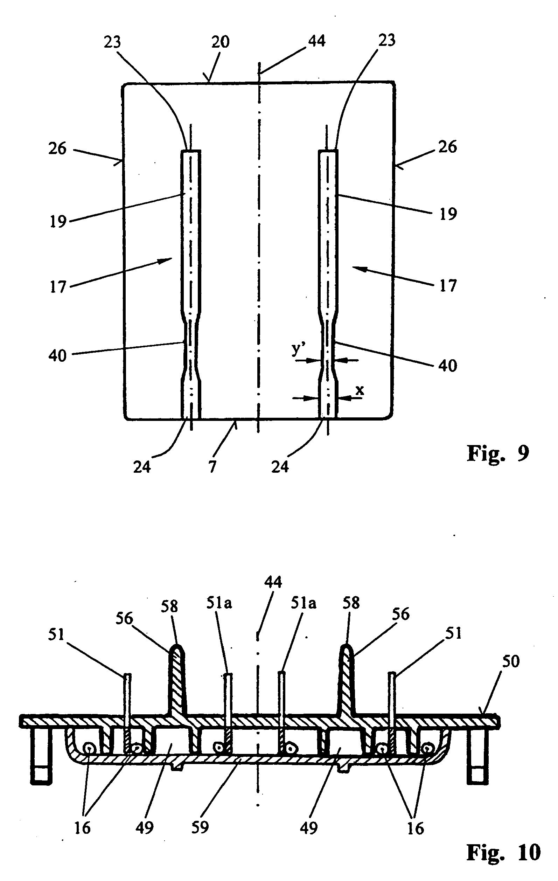

- Fig. 9: in schematischer Darstellung eine Seitenansicht auf einen weiteren Akkupack mit modifizierten Führungsabschnitten,
- Fig. 10: im Schnitt eine Kontaktplatte nach Fig. 8,
- Fig. 11: in schematischer Darstellung eine erste Verriegelung für den Akkupack im Akkuschacht.

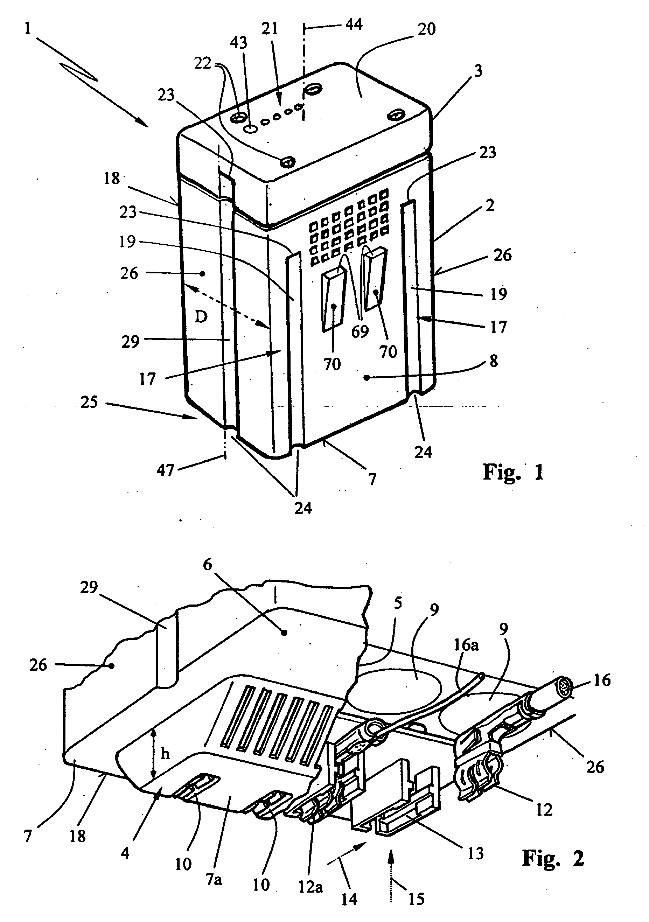

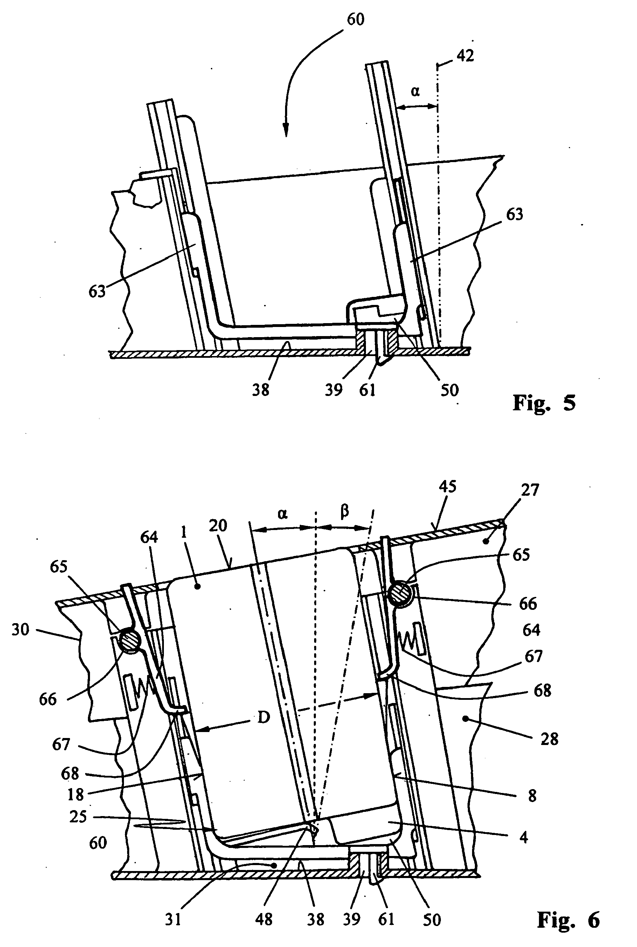

Der in Fig. 1 gezeigte Akkupack 1 besteht aus einem topfförmigen Gehäuse 2, welches durch einen Deckel 3 verschlossen ist. Der Akkupack 1 dient als Energiequelle für ein Elektrowerkzeug, insbesondere für ein handgeführtes Arbeitsgerät wie eine Motorkettensäge, eine Heckenschere, einen Trennschleifer, einen Freischneider, einen Kantenscheider, einen Hochentaster, ein Blasgerät, ein Sprühgerät, ein Sauggerät, ein Erdbohrgerät, ein Kombimotorgerät für multifunktionelle Vorsätze, ein Kehrgerät, eine Motorhacke, eine Bodenfräse, einen Hochdruckreiniger, einen Rasenmäher, einen Vertikutierer, einen Häcksler, einen Nass- oder Trockensauger oder dgl. Arbeitsgerät, welches vorzugsweise tragbar ist. Im Gehäuse 2 des Akkupacks 1 sind Akkuzellen in geeigneter Zellanordnung mechanisch fixiert gehalten, wobei die elektrisch miteinander verbundenen Zellen 9 über einen Anschlusskopf 4 mit äußeren Kontakten 51 zu verbinden sind. Der Anschlusskopf 4 ragt aus der Ebene 5 des Gehäusebodens 6 heraus, der eine untere Stirnseite 7 des Akkupacks bildet. Wie insbesondere aus Fig. 6 zu ersehen, liegt der Anschlusskopf 4 benachbart einer breiten Längsseite 8 nahe einem Rand der unteren Stirnseite 7, wobei die Höhe h des Anschlusskopfes 4 auch die Kipplage des Akkupacks 1 bestimmen kann.

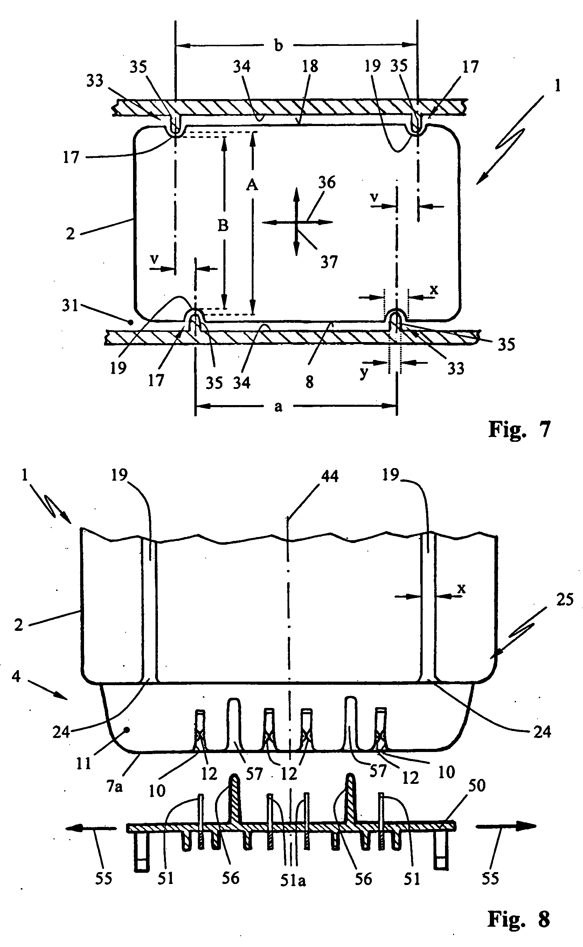

Im Anschlusskopf 4 sind Kontaktschlitze 10 ausgebildet, die sich - wie Fig. 8 zeigt - bis in die vordere Längsseite 11 erstrecken, die der breiten Längsseite 8 des Akkupackgehäuses 2 benachbart liegt. Die Kontaktschlitze 10 haben so etwa L-förmige Gestalt.

Durch die Kontaktschlitze 10 sind Kontaktklemmen 12 kontaktierbar, wobei jede Kontaktklemme 12 in einer Aufnahme 13 gehalten ist, derart, dass die Kontaktklemme 12 durch den L-förmigen Kontaktschlitz 10 kontaktierbar ist.

Aufgrund des L-förmigen Kontaktschlitzes können Kontaktelemente 51 sowohl von der Längsseite 11 her in Pfeilrichtung 14 in die Kontaktklemme 12 eingeschoben als auch in Einschubrichtung in Pfeilrichtung 15 senkrecht in die Kontaktklemme 12 eingesteckt werden. Eine kombinierte Bewegung mit Bewegungskomponenten in den Pfeilrichtungen 14 und 15 ist ebenfalls möglich.

Die Kontaktklemmen 12 sind am Ende von Anschlussdrähten 16 positioniert, die mit den im Gehäuse 2 des Akkupacks 1 angeordneten Zellen 9 elektrisch verbunden sind. Ferner sind Kontaktklemmen 12a vorgesehen, die mit Signalleitungen 16a verbunden sind, die z. B. mit einer im Akkupack 1 angeordneten Elektronik verbunden sind.

Die Zellen 9 können als NiCd-Zelle (Nickel-Cadmium-Zelle), als NiMh-Zelle(Nickel-Metallhydrid-Zelle), als LiIo-Zelle (Lithium-Ionen-Zelle), als LiPo-Zelle (Lithium-Polymer-Zelle), als LiFePo4-Zelle (Lithium-Eisen-Phosphat-Zelle), als Lithium-Titanat-Zelle oder dgl. Zelle aufgebaut sein; insbesondere werden Akkuzellen auf Lithiumbasis mit Zellspannungen von 2 bis 5 Volt, vorzugsweise 3,6 bis 3,7 Volt angeordnet, wobei die Ausgangssignale von im Akkupack 1 angeordneten Schutzschaltungen über die Signalleitungen 16a ausgegeben werden können. Die Anzahl der Zellen ist abhängig von der gewünschten Spannung von z. B. 12 Volt bis zu 120 Volt und mehr; vorzugsweise ist eine Akkupackspannung von 36 oder 42 Volt vorgesehen. Die Kapazität des Akkupacks liegt im Bereich von 2 bis 10 Ah.

Der in Fig. 1 dargestellte Akkupack weist auf seinen breiten Längsseiten 8, 18 je zwei Führungsabschnitte 17 auf, die im gezeigten Ausführungsbeispiel als Führungsnuten 19 gestaltet sind. Die Führungsnuten 19 erstrecken sich zwischen der unteren Stirnseite 7 mit dem Anschlusskopf 4 und einer oberen Stirnseite 20, die am Deckel 3 ausgebildet ist. Der Deckel 3 ist auf dem Gehäuse 2 vorzugsweise mittels Befestigungsschrauben 22 fixiert. In der Stirnseite 20 sind Anzeigeelemente 21 und/oder Bedienelemente 43 vorgesehen, über die der Benutzer im Akkupack 1 auftretende Ereignisse erkennen kann, den Ladezustand durch Drücken eines Bedienelementes 43 abrufen oder andere Prüfzyklen initialisieren kann.

Die als Führungsnuten 19 ausgebildeten Führungsabschnitte 17 verlaufen zueinander parallel und erstrecken sich im Wesentlichen zwischen der unteren Stirnseite 7 und der oberen Stirnseite 20. Im gezeigten Ausführungsbeispiel enden die Führungsnuten 19 an ihren dem Deckel 3 zugewandten Ende im Gehäuse 2 des Akkupacks 1, wobei die Enden 23 in Richtung der Längsmittelachse 44 des Akkupacks 1 geschlossen sind. Das gegenüberliegende Ende 24 der Führungsnut 17 ist offen, so dass die Führungsnut 17 zur unteren Stirnseite 7 offen ist. Die untere Stirnseite 7 bildet dabei das Einschubende 25 des Akkupacks 1.

Im gezeigten Ausführungsbeispiel sind in den schmalen Längsseiten 26 je eine weitere Führungsnut 29 eingelassen, die außermittig zur Seitenmittelachse 47 auf der schmalen Längsseite 26 liegt. Die weiteren Führungsnuten 29 liegen ferner in Richtung der Längsmittelachse 44 des Akkupacks 1 ausgerichtet und sind an ihren der unteren Stirnseite 7 zugewandt liegenden Enden 24 offen und an ihren der oberen Stirnseite 20 zugewandten Enden 23 axial verschlossen. Die weiteren Führungsnuten 29 erstrecken sich bis in den Deckel 3 des Akkupackgehäuses 2.

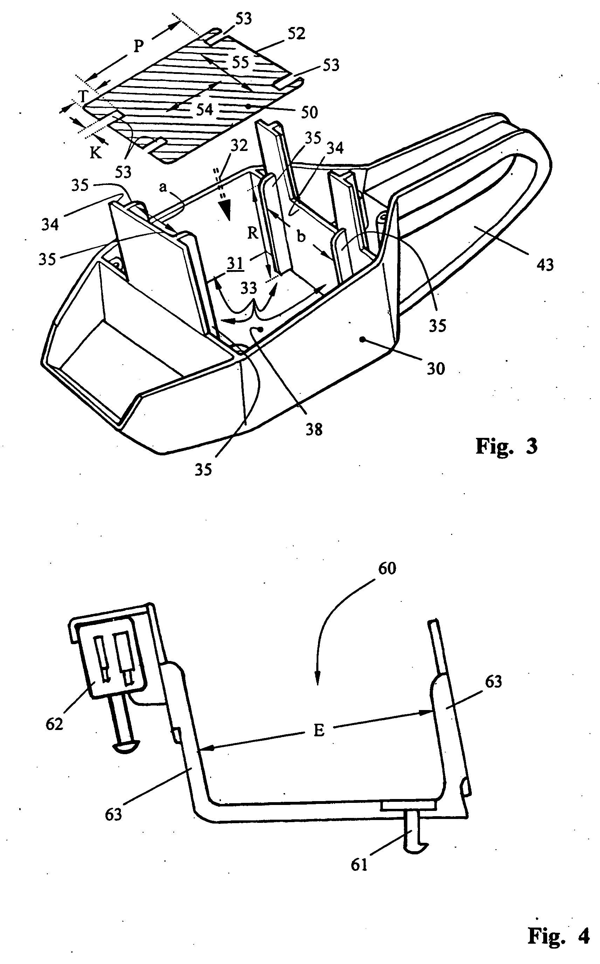

In Fig. 3 ist ein Teilgehäuse 30 eines tragbaren, handgeführten Arbeitsgerätes wie z.B. einer Heckenschere oder Motorkettensäge gezeigt. Das Teilgehäuse 30 weist einen hinteren Handgriff 43 auf, der sich in Längsrichtung des Teilgehäuses 30 erstreckt. Im Gehäuse 2 des Arbeitsgerätes ist ein Akkuschacht 31 ausgebildet, der der Aufnahme des Akkupacks 1 nach Fig. 1 dient. Der Akkuschacht 31 weist in Einschubrichtung 32 sich erstreckende Führungselemente 33 auf, die sich auf einander gegenüberliegenden Längsseiten 34 gegenüberliegen. Die Führungselemente 33 sind im gezeigten Ausführungsbeispiel als Führungsrippen 35 ausgeführt, die vorzugsweise einteilig mit dem Gehäuse 30 ausgebildet sind und als Erhebungen auf den Längsseiten 34 liegen. Die Führungsrippen 35 erstrecken sich über eine Teilhöhe R des Akkuschachtes 31, verlaufen also nicht über die Gesamthöhe des Akkuschachtes 31.

Auf jeder Längsseite 34 des Akkuschachtes 31 verlaufen je zwei Führungsrippen 35 zueinander parallel, wobei die Führungsrippen 35 auf der einen Längsseite 34 einen Abstand a und die Führungsrippen 35 auf der gegenüberliegenden Längsseite 34 einen Abstand b zueinander aufweisen. Dabei ist der Abstand b größer als der Abstand a, wie sich auch der Fig. 7 entnehmen lässt.

Aus Fig. 7 ist zu erkennen, dass die Führungselemente 35 der einen Längsseite 34 des Akkupacks zu den Führungselementen 35 auf der anderen, gegenüberliegenden Längsseite 34 des Akkuschachtes einen Versatz v aufweisen. Entsprechend liegen die Führungsabschnitte 17 der Längsseite 8 mit einem seitlichen Versatz v zu den Führungsabschnitten 17 der gegenüberliegenden Längsseite 18 im Akkupackgehäuse 2. Der Abstand a der Führungsabschnitte 17 auf der breiten Längsseite 8 des Akkupacks 1 ist geringer als der Abstand b der Führungsabschnitte 17 auf der breiten Längsseite 18. Dabei liegt der Abstand a innerhalb des Abstandes b. Die Führungsabschnitte 17 auf den Längsseiten 34 des Akkuschachtes 31 sind entsprechend dem Versatz v und den Abständen a und b angeordnet.

Wie Fig. 7 ferner zu entnehmen ist, ist die Breite x der Führungsnut 19 im Gehäuse 2 des Akkupacks größer als die Stärke (Breite) y einer Längsrippe 35 auf einer Längsseite 34 im Akkuschacht 31. Daher ist - wie Fig. 7 zeigt - der Akkupack 1 mit seitlichem Spiel entsprechend dem Doppelpfeil 36 in Fig. 7 im Akkuschacht 31 geführt. Da darüber hinaus die Breite B des Akkupackgehäuses 2 zwischen den Böden der Führungsnuten 19 kleiner ist als der Abstand A der einander gegenüberliegenden Führungsrippen 35 im Akkuschacht 31, ist der Akkupack 1 auch in Querrichtung in Richtung des Doppelpfeils 37 mit geringem Spiel gehalten.

Wird der Akkupack mit seinem Einschubende 25 voraus in den Akkuschacht 31 eingeschoben, treten die Führungsrippen 35 in die Führungsnuten 17 des Akkupackgehäuses 2 über deren offene Enden 24 ein, wobei der Akkupack 1 - in der durch die Lage der Führungsrippen 35 und Führungsnuten 19 konstruktiv vorgegebenen Drehlage - zunächst in Richtung der Doppelpfeile 36 und 37 mit geringem Spiel beweglich bleibt. Dies erleichtert das Einfädeln des Akkupacks 1 in den Akkuschacht 31. Die außermittig liegenden Führungsnuten 29 in den schmalen Längsseiten 26 gewährleisten auch, dass der Akkupack nur in einer vorgegebenen Drehlage in den Akkuschacht 31 einsetzbar ist. Darüber hinaus dienen die Führungsnuten 29 der lagerichtigen Positionierung und Halterung des Akkupacks 1 in einem nicht dargestellten Ladegerät.

Der Akkupack 1 wird am Anschlusskopf 4 mit Kontaktelementen 51 einer Kontaktplatte 50 kontaktiert, die im Bereich des Bodens 38 des Akkuschachtes 31 vorgesehen sind. In Fig. 3 ist eine derartige Kontaktplatte 50 schematisch dargestellt. Die Kontaktplatte 50 wird - bevorzugt auf alle Führungselemente 33 - aufgefädelt, so dass die Kontaktplatte 50 - entsprechend der Positionierung des Akkupacks 1 - in einer konstruktiv vorgegebenen Drehlage in Einschubrichtung 32 in den Akkuschacht 31 abgesenkt werden kann. Hierzu weist die Kontaktplatte 50 an gegenüberliegenden Längskanten 52 Aussparungen 53 auf, wobei jede Aussparung 53 eine Breite K sowie eine Tiefe T aufweist. Die Breite K der Aussparungen 53 ist breiter als die Dicke (Breite) y der Führungsrippen 35 im Akkuschacht 31. Die Tiefe T einander gegenüberliegender Aussparungen 53 ist so bemessen, dass der verbleibende Kontaktplattenabschnitt zwischen den Aussparungen 53 eine Erstreckung P hat, die kleiner ist als der Abstand A zwischen den Längsrändern der Führungsrippen 19 (Fig. 7).

Aufgrund dieser konstruktiven Ausgestaltung wird die im Akkuschacht 31 abgesenkte Kontaktplatte 50 in ihrer Ebene mit Spiel an den Führungsrippen 35 gehalten, wodurch sich eine in der Ebene der Kontaktplatte 50 schwimmende Lagerung der Kontaktplatte 50 ergibt. Die Kontaktplatte 50 ist in der Plattenebene aufgrund des Spiels der Führungsrippen 35 in den Aussparungen 53 in Richtung der Doppelpfeile 54 und 55 beweglich. Aufgrund der schwimmenden Lagerung der Kontaktplatte 50 mit den darauf angeordneten Kontakten 51 (Fig. 8) ist ein positionsgenaues Einfädeln der Kontaktelemente 51 in die Kontaktklemmen 12 gewährleistet. Im Ausführungsbeispiel ist die Kontaktplatte 50 an einem Trägereinschub 60 gehalten, der am Boden 38 des Akkuschachtes 31 gesichert wird. Im gezeigten Ausführungsbeispiel weist der Trägereinschub 60 einen Rastbügel 61 auf, der - vgl. Figuren 5 und 6 - in eine Rastöffnung 39 im Boden 38 des Akkupacks 1 eingreift. Die Rastöffnung 39 und der Rastbügel 61 sind derart zueinander ausgerichtet, dass die schwimmende Lagerung der Kontaktplatte 50 zumindest in Richtung des Doppelpfeils 55, bevorzugt auch in Richtung des Doppelpfeils 54 aufrechterhalten bleibt.

Wie Fig. 4 zeigt, kann der Trägereinschub 60 nicht nur die Kontaktplatte 50 halten, sondern auch weitere Bauelemente des Elektrogerätes, z. B. elektrische Bauteile 62 des Elektrogerätes wie einen Ein-/ Ausschalter.

Die einander gegenüberliegenden Längsseiten 34 des Akkuschachtes 31 liegen - wie die Figuren 5 und 6 zeigen - mit einem Winkel α bzw. β zur Lotrechten 42 auf den Gehäuseboden 38 nach vorne oder nach hinten geneigt. Der Winkel α bzw. β beträgt etwa zwischen 2° und 20°, so dass sich eine Kipplage des Akkupacks 1 im Akkuschacht 31 ergibt. Vorzugsweise liegt der Akkupack 1 um einen Winkel α von 10° nach hinten geneigt. Es kann auch zweckmäßig sein, den Akkupack 1 um einen Winkel β von insbesondere 15° nach vorne zu kippen, wie in Figur 6 angedeutet ist:

Der Trägereinschub 60 dient ferner der Fixierung des Akkupacks 1 in der in Fig. 6 gezeigten Einschubstellung. Der Trägereinschub 60 weist zwei zu den Längsseiten 34 des Akkuschachtes 31 parallel verlaufende Randwände 63 auf, deren Abstand E etwa der Dicke D des Akkupacks 1 entspricht. Die Dicke D des Akkupacks ist zwischen dessen breiten Längsseiten 8 und 18 gemessen. Dadurch wird - wie Fig. 6 zeigt - in der Einschubstellung des Akkupacks 1 im Akkuschacht 31 das Einschubende 25 im Trägereinschub 60 etwa spielfrei gehalten, so dass der Akkupack 1 in der in Fig. 6 gezeigten Einschubstellung weitgehend spielfrei fixiert ist.

Um beim Einschieben des Akkupacks 1 in den Akkuschacht 31 eine frühe, weitgehend spielfreie Halterung im Gehäuse 30 zu erzielen, ist in Weiterbildung der Erfindung vorgesehen, benachbart zu den offenen Enden 24 der Führungsnuten 19 Klemmabschnitte 40 auszubilden, die gegenüber einer Führungsnut 19 verengt ausgebildet sind. Ein Klemmabschnitt 40 hat eine konstruktiv vorgegebene Restweite y', die etwa der Stärke (Breite) y einer Führungsrippe 35 entspricht. Dadurch wird erreicht, dass bei der Einschubbewegung in Einschubrichtung 32 der Akkupack 1 in Richtung des Doppelpfeils 36 (Fig. 7) kurz nach Greifen der Führungsrippen 35 spielfrei auf den Führungsrippen 35 aufsitzt. Da das Akkupackgehäuse 2 ebenso wie die Führungsrippen 35 bzw. das Gehäuse 30 aus Kunststoff bestehen, kann die Weite y' des Abschnittes 40 auch geringfügig kleiner als die Stärke y der Führungsrippe 35 ausgebildet werden, so dass eine Klemmwirkung erzielt ist. In der in Fig. 6 gezeigten Einschubstellung ist der Akkupack 1 spielfrei im Gehäuse 30 fixiert. In dieser gezeigten Einschubstellung liegt die obere Stirnseite 20 mit den Anzeigeelementen 21 und/oder Bedienelementen 43 in einer Ebene mit der Gehäuseoberseite 45 eines Gehäuseoberteils 27. Das Gehäuseoberteil 27 bildet zusammen mit dem Gehäuseunterteil 28 das Teilgehäuse 30 des Arbeitsgerätes.

Wird ein Akkupack 1 in einen Akkuschacht 31 eingeschoben, muss dieser drehlagerichtig positioniert und mit seinem Einschubende 25 voraus in den Schacht 31 abgesenkt werden. Dabei treten die Führungsrippen 35 über die offenen Enden 24 der Führungsnuten 19 ein und stellen bei Eintritt in die Klemmabschnitte 40 eine weitgehend spielfreie ausgerichtete Lage des Akkupacks 1 im Akkuschacht 31 sicher.

Beim Absenken des Akkupacks 1 in den Akkuschacht 31 fährt das Einschubende 25 in den Trägereinschub 60 ein, wodurch der Akkupack 1 und damit der Anschlusskopf 4 in Richtung des Doppelpfeils 37 (Fig. 7) positioniert wird. Beim weiteren Absenken des Akkupacks 1 in den Aufnahmeschacht 31 nähert sich der Anschlusskopf 4 der Kontaktplatte 50 und den Kontaktelementen 51. Aufgrund der schwimmenden Lagerung ist die Kontaktplatte 50 quer zur Einschubrichtung in Richtung des Doppelpfeils 55 beweglich, so dass eine Ausrichtung der Kontaktplatte 50 relativ zu den Kontaktschlitzen 10 des Anschlusskopfes 4 am Akkupack 1 erfolgen kann. In Weiterbildung der Erfindung ist vorgesehen, auf der Kontaktplatte 50 zumindest ein Zentrierelement, vorzugsweise in der Form eines Zentrierstegs 56 anzuordnen, dem eine entsprechende Zentrieraufnahme, z. B. ein Zentrierschlitz 57 im Gehäuse des Anschlusskopfes 4 zugeordnet ist. Der Zentrierschlitz 57 erstreckt sich - ähnlich wie die Kontaktschlitze 10 - vom Boden 7a des Anschlusskopfes 4 bis in dessen Stirnseite 11. Im Ausführungsbeispiel sind zwei Zentrierstege 56 vorgesehen, zwischen denen die Kontaktelemente 51a von Steueranschlüssen liegen, während die äußeren Kontaktelemente 51 der Leistungsübertragung dienen.

Die Zentrierstege 56, die auch als Zentrierdorn 58 oder dgl. ausgeführt sein können, überragen die Kontaktelemente 51 und 51a, so dass zunächst die Zentrierstege 56 mit dem Anschlusskopf 4 in Berührung treten. Die Zentrierschlitze 57 sind leicht erweitert ausgeführt, so dass ein leichtes Einfädeln der Zentrierköpfe 58 in den Zentrierschlitz 57 erfolgt und eine Ausrichtung der Kontaktplatte 50 in Doppelpfeilrichtung 55 relativ zum Anschlusskopf 4 bewirkt wird. Dadurch ist gewährleistet, dass die Kontaktelemente 51 und 51a beim weiteren Absenken des Akkupacks 1 in den Akkuschacht 31 lagerichtig zu den Kontaktschlitzen 10 liegen und ohne mechanische Beschädigung die Kontaktklemmen 12, 12a sicher kontaktieren können.

Da die Zentrierstege 56 die Kontaktelemente 51, 51a überragen, dienen diese Zentrierstege 56 zugleich als Schutzelemente gegen eine mechanische Beschädigung der Kontaktelemente 12, 12a bei leerem Akkuschacht 31,

Aufgrund der Kipplage des Akkupacks 1 relativ zur Kontaktplatte 50 erfolgt ein Einschieben der Kontaktelemente 51, 51a in die Kontaktklemmen 12, 12a in einer Steck-/Schiebebewegung, die sich aus Wegkomponenten in den Pfeilrichtungen 14 und 15 (Fig. 2) zusammensetzt. Dadurch wird eine sichere elektrische Kontaktierung erzielt.

Vorteilhaft wird auf der dem Anschlusskopf 4 abgewandten Seite der Kontaktplatte 50 eine Abdeckung 59 aufgesetzt, wodurch zwischen der Kontaktplatte 50 und der Abdeckung 59 Kabelkanäle 49 zur Führung von Anschlussdrähten 16 gebildet werden können.

In Weiterbildung der Erfindung ist - wie in Fig. 6 gezeigt - der Akkupack 1 in seiner gezeigten Einschubstellung im Akkuschacht 31 gegen die Kraft einer Hubfeder 48 verriegelt gehalten. Im Ausführungsbeispiel nach Fig. 6 sind Rastklinken 64 vorgesehen, die mittels Lagerbolzen 65 im Gehäuse 30 des Arbeitsgerätes verschwenkbar gehalten sind. Im gezeigten Ausführungsbeispiel nach Fig. 6 sind die Lagerbolzen 65 in einer Lageraufnahme 66 des Gehäuseunterteils 28 eingelegt, wobei die Lageraufnahme 66 durch Aufsetzen des Gehäuseoberteils 27 verschlossen wird. In der verschlossenen Lageraufnahme 66 sind die Lagerbolzen 65 unverlierbar gehalten und werden durch die Kraft einer Stellfeder 67 in eine Schwenklage in den Akkuschacht 31 vorbelastet. Zumindest das Rastende 68 einer Rastklinke 64 ragt in den Akkuschacht 31 ein und stützt sich an einem Rastanschlag 69 ab, der am Ende einer Rampe 70 auf einer breiten Längsseite 8 des Akkupackgehäuses 2 ausgebildet ist. Im gezeigten Ausführungsbeispiel sind auf einer breiten Längsseite 8 zwischen den Führungsnuten 19 zwei Rastrampen 70 vorgesehen, deren Rastanschläge 69 sich gemeinsam an einer Rastklinke 64 abstützen, die entsprechend breit ausgebildet ist. Auf der gegenüberliegenden breiten Längsseite 18 sind entsprechende Rampen 70 mit Rastanschlägen 69 vorgesehen.

Über die Rampe 70 werden beim Einschieben des Akkupacks 1 in den Akkuschacht 31 die Rastklinken 64 zurückgedrängt, bis die Rastenden 68 die Rastanschläge 69 hintergreifen können und die Stellfeder 67 die Rastklinke 64 in die in Fig. 6 gezeigte Raststellung verschwenken.

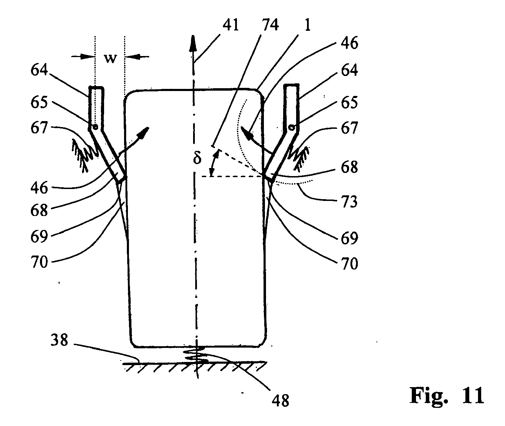

Wie Fig. 11 zeigt, sind die Rastklinken 64 derart gestaltet und gelagert, dass die in Pfeilrichtung 41 gelagerte Federkraft der Hubfeder 48 über die Rastanschläge 69 derart in die Rastklinke 64 eingeleitet wird, dass diese eine Drehbewegung in Pfeilrichtung 46 ausführen, die Rastklinken 64 somit in die Raststellung mit Kraft beaufschlagen.

Dieser Verriegelungseffekt wird dadurch erreicht, dass der Kraftangriffspunkt der Federkraft der Hubfeder 48 am Rastende 68 mit Abstand w zum Lagerbolzen 65 der Rastklinke 64 liegt und das Rastende 68 zwischen dem Akkupack 1 und dem Lagerbolzen 65 liegt.

Zum Lösen der Verriegelung sind die beiden Rastklinken 64 entgegen der Pfeilrichtung 46 zu verschwenken, wozu der Akkupack 1 durch den Benutzer leicht gegen die Hubfeder 63 gedrückt wird, um ein ausreichendes Spiel zwischen dem Anschlag 69 und dem Rastende 68 zum Lösen der Verriegelung herzustellen.

Um beim Lösen des Akkupacks 1 aus dem Akkuschacht ein Niederdrücken des Akkupacks 1 gegen die Kraft der Hubfeder 48 zu vermeiden, kann es vorteilhaft sein, die Flächen des Rastanschlages 69 am Akkupack 1 geneigt auszubilden. Bevorzugt bildet die Fläche des Rastanschlages 69 eine Tangente 74 an den Schwenkkreis 73 des Rastendes 68, so dass das Rastende 68 ohne Verlagerung des Akkupacks 1 gegen die Kraft der Hubfeder 48 ausgeschwenkt werden kann. Die Fläche des Rastanschlages 69 liegt unter einem Winkel δ zur Horizontalen bzw. zum Gehäuseboden 6 des Akkupackgehäuses 1 bzw. zu dessen Stirnseiten 7 und 20.

## Patentansprüche

1. Handgeführtes Elektrogerät, insbesondere tragbares, handgeführtes Arbeitsgerät wie eine Heckenschere, eine Motorkettensäge, ein Freischneider oder dgl., mit einem Gehäuse (30) in dem ein Akkuschacht (31) als Aufnahme für einen Akkupack (1) vorgesehen ist, wobei der Akkuschacht (31) in Einschubrichtung (32) sich erstreckende Führungselemente (33) aufweist, die mit Führungsabschnitten (17) des Akkupacks (1) zusammenwirken, und mit einem am Gehäuse (2) des Akkupacks (1) ausgebildeten elektrischen Anschlusskopf (4), dem im Akkuschacht (31) liegende Kontaktelemente (51, 51 a) zugeordnet sind, wobei in einer vorgegebenen Einschubstellung des Akkupacks (1) im Akkuschacht (31) die Kontaktelemente (51, 51 a) den Anschlusskopf (4) elektrisch kontaktieren, wobei die Kontaktelemente (51, 51a) im Akkuschacht (31) auf einer Kontaktplatte (50) gehalten sind, die im Akkuschacht (31) schwimmend gelagert ist,
**dadurch gekennzeichnet, dass** der Akkupack (1) in seiner Einschubstellung im Akkuschacht (31) gegen die Kraft einer Hubfeder (48) durch Rastriegel (64) verriegelt gehalten ist, die **im Akkuschacht (31) auf einander gegenüberliegenden Längsseiten (34) angeordnet sind und mit Rastanschlägen (69) am Gehäuse (2) des Akkupacks (1) zusammenwirken,¹ wobei der** Rastriegel (64) ein Schwenkriegel ist,² dessen Lagerbolzen (65) zwischen einem Gehäuseoberteil (27) und einem Gehäuseunterteil (28) des Gehäuses (30) unverlierbar gehalten ist³.
¹ Anspruch 10
² 1. Teilmerkmal Anspruch 11
³ 2. Teilmerkmal Anspruch 11

2. Elektrogerät nach Anspruch 1,
**dadurch gekennzeichnet, dass** die Rastriegel (64) im Akkuschacht (31) auf einander gegenüberliegenden Breitseiten (34) angeordnet sind und mit Rastanschlägen (69) am Gehäuse (2) des Akkupacks (1) zusammenwirken.

3. Elektrogerät nach Anspruch 1 oder 2,
**dadurch gekennzeichnet, dass** die Kontaktplatte (50) in der Plattenebene in allen Richtungen (54, 55) beweglich gehalten ist.

4. Elektrogerät nach einem der Ansprüche 1 bis 3,
**dadurch gekennzeichnet, dass** die Kontaktplatte (50) an den in Einschubrichtung (32) sich erstreckenden Führungselementen (33) mit Spiel gehalten ist, und die Führungselemente (33) mit Spiel in Führungsaussparungen (53) der Kontaktplatte (50) eingreifen, wobei die Führungselemente (33) im Akkuschacht (31) vorzugsweise Längsrippen (35) sind.

5. Elektrogerät nach einem der Ansprüche 1 bis 4,
**dadurch gekennzeichnet, dass** die Kontaktplatte (50) am Boden (38) des Akkuschachtes (31) gehalten, vorzugsweise am Boden (38) verrastet ist.

6. Elektrogerät nach einem der Ansprüche 1 bis 5,
**dadurch gekennzeichnet, dass** die Kontaktplatte (50) in einem Kontaktplattenhalter (60) angeordnet ist, der an Führungselementen (33) des Akkuschachtes (31) geführt und gehalten ist und vorzugsweise als Träger weiterer elektrischer Bauteile (62) dient.

7. Elektrogerät nach einem der Ansprüche 1 bis 6,
**dadurch gekennzeichnet, dass** die Führungselemente (33) des Akkuschachtes (31) mit Spiel in die Führungsabschnitte (17) des Akkupacks (1) eingreifen.

8. Elektrogerät nach einem der Ansprüche 1 bis 7,
**dadurch gekennzeichnet, dass** der Anschlusskopf (4) des Akkupacks (1) Kontaktschlitze (10) zum Eingriff der Kontaktelemente (51, 51a) aufweist, wobei sich die Kontaktschlitze (10) von dem Boden (7a) des Anschlusskopfes (4) bis in dessen Stirnseite (11) erstrecken und die Kontaktplatte (50) vorzugsweise ein Zentrierelement (56) aufweist, und das Zentrierelement (56) die Kontaktelemente (51, 51a) überragt und in Einschubstellung des Akkupacks in eine Zentrieraufnahme (57) im Anschlusskopf (4) eingreift:

9. Elektrogerät nach einem der Ansprüche 1 bis 8,
**dadurch gekennzeichnet, dass** der Anschlusskopf (4) aus der Ebene des Gehäusebodens (6) des Akkupacks (1) herausragt.

10. Elektrogerät nach einem der Ansprüche 1 bis 9,
**dadurch gekennzeichnet, dass** die Führungsabschnitte (17) im Gehäuse (2) des Akkupacks (1) Längsnuten (19) sind, die sich im Wesentlichen über die Höhe des Akkupacks (1) auf einer breiten Längsseite (8, 18) zwischen den Stirnseiten (7, 20) des Akkupacks (1) erstrecken, wobei das Ende (24) der Führungsnut (19) zu der Stirnseite (7) mit dem Anschlusskopf (4) vorzugsweise offen ist und insbesondere eine Breite (x) aufweist, die breiter als das Führungselement (33) ist.

## Claims

1. Hand-held electric implement, in particular portable hand-held working implement, such as a hedge cutter, a motorised chainsaw, a free cutter or the like, comprising a housing (30), in which is provided a battery shaft (31) as a receptacle for a battery pack (1), the battery shaft (31) having guide elements (33), which extend in the insertion direction (32) and act together with guide sections (17) of the battery pack (1), and further comprising an electric connecting button (4), which is formed on the housing (2) of the battery pack (1) and to which are assigned contact elements (51, 51a) located in the battery shaft (31), wherein the contact elements (51, 51a) electrically contact the connecting button (4) at a preset insertion position of the battery pack (1) in the battery shaft (31), wherein the contact elements (51, 51a) are held in the battery shaft (31) on a contact plate (50) floating in the battery shaft (31),
**characterised in that** the battery pack (1) is in its insertion position in the battery shaft (31) held locked against the force of a lifting spring (48) by latching bolts (64), which are arranged in the battery shaft (31) on opposite long sides (34) and act together with latching stops (69) on the housing (2) of the battery pack (1), the latching bolt (64) being a swivel bolt, the bearing bolts (65) of which are held captive between a housing top part (27) and a housing bottom part (28) of the housing (30).

2. Electric implement according to claim 1,
**characterised in that** the latching bolts (64) are arranged in the battery shaft (31) on opposite wide sides (34) and act together with latching stops (69) on the housing (2) of the battery pack (1).

3. Electric implement according to claim 1 or 2,
**characterised in that** the contact plate (50) is held movably in all directions (54, 55) in the plate plane.

4. Electric implement according to any of claims 1 to 3,
**characterised in that** the contact plate (50) is held with play on the guide elements (33) extending in the insertion direction (32), and **in that** the guide elements (33) engage with play with guide recesses (53) of the contact plate (50), the guide elements (33) in the battery shaft (31) preferably being longitudinal ribs (35).

5. Electric implement according to any of claims 1 to 4,
**characterised in that** the contact plate (50) is held on the base (38) of the battery shaft (31), being preferably latched to the base (38).

6. Electric implement according to any of claims 1 to 5,
**characterised in that** the contact plate (50) is held in a contact plate holder (60), which is guided and held on guide elements (33) of the battery shaft (31) and is preferably used as a support for further electric components (62).

7. Electric implement according to any of claims 1 to 6,
**characterised in that** the guide elements (33) of the battery shaft (31) engage with play with the guide sections (17) of the battery pack (1).

8. Electric implement according to any of claims 1 to 7,
**characterised in that** the connecting button (4) of the battery pack (1) has contact slots (10) for the engagement of the contact elements (51, 51a), wherein the contact slots (10) extend from the base (7a) of the connecting button (4) to its end face (11) and the contact plate (50) preferably has a centring element (56), and wherein the centring element (56) projects beyond the contact elements (51, 51a) and engages with a centring receptacle (57) in the connecting button (4) in the inserted position of the battery pack.

9. Electric implement according to any of claims 1 to 8,
**characterised in that** the connecting button (4) projects from the plane of the housing base (5) of the battery pack (1).

10. Electric implement according to any of claims 1 to 9,
**characterised in that** the guide sections (17) in the housing (2) of the battery pack (1) are longitudinal grooves (19), which substantially extend along the height of the battery pack (1) on a wide longitudinal side (8, 18) between the end faces (7, 20) of the battery pack (1), wherein the end (24) of the guide groove (19) is preferably open towards the end face (7) with the connecting button (4) and in particular has a width (x) which is greater than that of the guide element (33).

## Revendications

1. Appareil électrique tenu à la main, en particulier appareil portatif tenu à la main tel qu'un taille-haie, une tronçonneuse, une débroussailleuse ou autre, avec un boîtier (30) dans lequel un compartiment pour batterie (31) est prévu comme logement pour une batterie (1), étant précisé que le compartiment pour batterie (31) présente des éléments de guidage (33) qui s'étendent dans le sens d'enfichage (32) et qui coopèrent avec des sections de guidage (17) de la batterie (1), et avec une tête de raccordement électrique (4) qui est formée sur le boîtier (2) de la batterie (1) et à laquelle sont associés des éléments de contact (51, 51a) situés dans le compartiment pour batterie (31), étant précisé que dans une position d'enfichage prédéfinie de la batterie (1) dans le compartiment pour batterie (31), les éléments de contact (51, 51a) établissent un contact électrique avec la tête de raccordement (4), et que les éléments de contact électrique (51, 51a) sont fixés, dans le compartiment pour batterie (31), sur une plaque de contact (50) qui est montée de manière flottante dans ledit compartiment (31),
**caractérisé en ce que** la batterie (1), dans sa position d'enfichage dans le compartiment pour batterie (31), est maintenue verrouillée à l'encontre de la force d'un ressort de soulèvement (48) grâce à des verrous d'enclenchement (64) qui sont disposés dans ledit compartiment (31) sur des côtés longitudinaux opposés (34) et qui coopèrent avec des butées d'enclenchement (69) prévues sur le boîtier (2) de la batterie (1), étant précisé que le ressort d'enclenchement (64) est un ressort pivotant dont le pivot (65) est fixé de manière imperdable entre une partie supérieure (27) et une partie inférieure (28) du boîtier (30).

2. Appareil électrique selon la revendication 1,
**caractérisé en ce que** les ressorts d'enclenchement (64) sont disposés dans le compartiment pour batterie (31) sur des côtés larges opposés (34) et coopèrent avec des butées d'enclenchement (69) prévues sur le boîtier (2) de la batterie (1).

3. Appareil électrique selon la revendication 1 ou 2,
**caractérisé en ce que** la plaque de contact (50) est fixée de manière mobile dans toutes les directions (54, 55) dans le plan de plaque.

4. Appareil électrique selon l'une des revendications 1 à 3,
**caractérisé en ce que** la plaque de contact (50) est fixée avec du jeu aux éléments de guidage (33) qui s'étendent dans le sens d'enfichage (32), et les éléments de guidage (33) pénètrent avec du jeu dans des creux de guidage (53) de la plaque de contact (50), étant précisé que les éléments de guidage (33) prévus dans le compartiment pour batterie (31) sont de préférence des nervures longitudinales (35).

5. Appareil électrique selon l'une des revendications 1 à 4,
**caractérisé en ce que** la plaque de contact (50) est fixée au fond (38) du compartiment pour batterie (31), et est de préférence enclenchée au fond (38).

6. Appareil électrique selon l'une des revendications 1 à 5,
**caractérisé en ce que** la plaque de contact (50) est disposée dans un support de plaque de contact (60) qui est guidé et fixé au niveau des éléments de guidage (33) du compartiment pour batterie (31) et qui sert de préférence de support à d'autres composants électriques (62).

7. Appareil électrique selon l'une des revendications 1 à 6,
**caractérisé en ce que** les éléments de guidage (33) du compartiment pour batterie (31) pénètrent avec du jeu dans les sections de guidage (17) de la batterie (1).

8. Appareil électrique selon l'une des revendications 1 à 7,
**caractérisé en ce que** la tête de raccordement (4) de la batterie (1) présente des fentes de contact (10) pour la pénétration des éléments de contact (51, 51a), étant précisé que les fentes de contact (10) s'étendent du fond (7a) de la tête de raccordement (4) jusque dans le côté frontal (11) de celle-ci et que la plaque de contact (50) présente de préférence un élément de centrage (56), et l'élément de centrage (56) dépasse des éléments de contact (51, 51a) et pénètre dans le sens d'enfichage de la batterie dans un creux de centrage (57) prévu dans la tête de raccordement (4).

9. Appareil électrique selon l'une des revendications 1 à 8,
**caractérisé en ce que** la tête de raccordement (4) dépasse du plan du fond de boîtier (6) de la batterie (1).

10. Appareil électrique selon l'une des revendications 1 à 9,
**caractérisé en ce que** les sections de guidage (17) prévues dans le boîtier (2) de la batterie (1) sont des rainures longitudinales (19) qui s'étendent globalement sur la hauteur de la batterie (1) sur un côté longitudinal large (8, 18) entre les côtés frontaux (7, 20) de la batterie (1), étant précisé que l'extrémité (24) de la rainure de guidage (19) est de préférence ouverte vers le côté frontal (7) avec la tête de raccordement (4) et présente en particulier une largeur (x) qui est plus large que l'élément de guidage (33).
